# EUROPÄISCHE PATENTSCHRIFT

(11) **EP 2 006 008 B1**
(45) Veröffentlichungstag und Bekanntmachung des Hinweises auf die Patenterteilung: **22.08.2012**
(21) Anmeldenummer: 08009594.6
(22) Anmeldetag: 27.05.2008
(51) Int. Cl.: B01D 39/16, A47L 9/14, B32B 5/26, D04H 13/00

(54) **Filtermedium für die Luft- und Flüssigkeitsfiltration**
Filter medium for air and liquid filtration
Support de filtre pour la filtration d'air et de liquide

(30) Priorität: 11.06.2007 DE 102007027268
(43) Veröffentlichungstag der Anmeldung: 24.12.2008
(73) Patentinhaber: Sandler AG, 95126 Schwarzenbach/Saale (DE)
(72) Erfinder:

(56) Entgegenhaltungen:
- EP-A- 1 050 331
- EP-A- 1 795 247
- WO-A-2007/118640
- DE-A1- 10 221 694
- US-A1- 2002 025 748

## Beschreibung

Die vorliegende Erfindung betrifft ein Filtermedium, welches im Bereich der Filtration von flüssigen und/oder gasförmigen Fluiden Anwendung findet. Filtermedien der gattungsgemäßen Art sind aus dem Stand der Technik in vielerlei Lösungsvarianten bekannt.

EP 0798612 beschreibt ein Filtermedium aus einer Heißluft-gebundenen Vliesbahn aus konjugierten, spinngebundenen Filamenten, bestehend aus einem Polyolefin und einem thermoplastischen Polymer mit höherem Schmelzpunkt. Der Nachteil dieses Materials ist die nur gering vorhandene Temperaturstabilität aufgrund der vorhandenen polyolefinischen Lagen. Des Weiteren ist, da das Filtermedium keine Feinschicht auf der Abströmseite aufweist, die Partikelrückhaltung bei feinen Stäuben nur gering.

DE 19752143 offenbart ein Filterelement, welches anströmseitig aus einem Meltblown und abströmseitig aus einem cellulosehaltigen Filterpapier aufgebaut ist. Nachteilig bei diesem Material ist, dass neben der Tatsache, dass das anströmseitige Meltblownmaterial nur eine geringe Staubspeicherfähigkeit besitzt, das cellulosehaltige Filterpapier bei Kontakt mit Flüssigkeiten quillt und die Porengrößen ändert. Die Filtrationseigenschaften ändern sich daher im Gebrauch, die Leistung und Standzeit des Filters ist nicht vorhersehbar.

Eine Variante dieser cellulosehaltigen Filter ist aufgrund der vorbeschriebenen Problematik die Ausrüstung des Filterpapiers mit Phenolharzen. Dies verhindert zwar die Quellung des Materials in Verbindung mit Flüssigkeiten, hat aber den Nachteil, das aus dem Tränkharz eine Vielzahl von niedermolekaren Substanzen, wie beispielsweise Formaldehyd oder ähnliches ausgetragen werden kann, was den Einsatz beispielsweise als Luftfilter kritisch gestaltet. Des Weiteren ist die Staubspeicherfähigkeit des Gesamtaufbaus aufgrund der geringen Dicke und der Feinheit der Poren gering.

Die DE 10221694 beschreibt einen mehrlagigen Aufbau, der speziell für Staubsaugerbeutel verwendet wird. Hier wurde eine Grobschicht als Staubspeicherlage einer Feinfilterlage aus Meltblown-Vlies vorgeschaltet. Bei genügender Staubspeicherung wird durch die Feinschicht eine gute Abscheidung auch feiner Stabpartikel gewährleistet. Allerdings ist der so hergestellte Aufbau mechanisch nicht stabil, sodass, um die mechanischen Festigkeiten zu erreichen, abströmseitig eine Stützlage notwendig ist. Die Folge ist ein komplexer, vielschichtiger Aufbau, wobei der adhäsive Verbund der einzelnen Lagen mittels Klebstoff die Luftdurchlässigkeit negativ beeinflusst. Wird weniger Klebstoff eingesetzt, ist die mechanische Stabilität wiederum ungenügend.

Aufgabe der vorliegenden Erfindung ist es daher, ein verbessertes Filtermedium für die Filtration von flüssigen und/oder gasförmigen Fluiden bereitzustellen, das die Nachteile des Stands der Technik nicht aufweist, insbesondere soll die Speicherfähigkeit für Partikel optimiert werden, ohne dass die Durchlässigkeit für Fluide negativ beeinflusst wird.

Gelöst wird die Aufgabe durch die Merkmale des Anspruchs 1, vorteilhafte Ausgestaltungen sind in den Unteransprüchen **2 und 3 genannt. Die Ansprüche 4 und 5 zeigen vorteilhafte Verwendungen des erfindungsgemäßen Filtermediums.**

Das erfindungsgemäße Filtrationsmaterial ist ein Verbundmaterial, bei welchem die Einzellagen ohne die Zuhilfenahme von Klebstoffen rein thermisch mittels Druck und Hitze miteinander verbunden werden.

Bei den zum Einsatz kommenden Materialien wurde darauf geachtet, dass zur Förderung der Verbundhaftung die Einzellagen aus gleichen Polymergruppen bestehen. Aus Gründen der Stabilität gegenüber Temperaturen haben sich Polymere aus der Reihe der Polyester als günstig erwiesen.

Filter nach dem Stand der Technik sind zumeist Kombinationen aus Materialien, die eine geringe Eigendicke bei vergleichsweise geringen Faserdurchmessern haben. Dadurch bedingt ergibt sich eine nur geringe Speicherfähigkeit für in den Fluiden vorhandene Verunreinigungen. Auch ist die mechanische Belastbarkeit derartiger Filter zumeist nur gering, es muss, wie bereits erwähnt, mit Stützlagen oder in Stabilisierungslagen gearbeitet werden. Obwohl die erfindungsgemäßen Filtermedien sowohl für die Filtration flüssiger als auch gasförmiger Fluide geeignet sind, beziehen sich die weiteren Ausführungen, insbesondere der Beispiele auf den Bereich der Filtration von gasförmigen Fluiden.

Das erfindungsgemäße Filtermedium ist die Kombination eines mechanisch belastbaren, hochporösen Vliesstoffes aus Stapelfasern mit Porengrößen von größer 400µm mit einem feinporigen Meltblown-Vliesstoff, dessen Porengrößen zwischen 20 und 200 µm liegen.

Die beiden Ausgangsvliesstoffe werden mittels Druck und Hitze miteinander punktuell verschweißt, sodass das erfindungsgemäße Filtrationsmaterial letztendlich über eine belastbare hochporöse, speicherfähige Anströmseite und ein feinporige Abströmseite verfügt.

Erfindungsgemäß kommt diese Kombination ohne zusätzliche Stützlagen aus. Auf die im Stand der Technik übliche abströmseitige Stützlage kann bei dem erfindungsgemäßen Filtrationsmaterial verzichtet werden. Die Funktion der Aufnahme mechanischer Belastungen wird von dem anströmseitig befindlichen Material übernommen.

Dazu ist es wichtig, das Dehnungsverhalten der beiden Lagen einander anzugleichen, da sonst während des Gebrauchs das Meltblown zum Aufplatzen neigt und es somit zum Filterdurchbruch kommen kann.

Aus diesem Grund wird als anströmseitige Lage ein steifes aber trotzdem hochporöses Vlies benötigt, beispielsweise können vernadelte Vliese hier zum Einsatz kommen. Die prinzipiellen Mechanismen zur Herstellung von Vliesstoffen aus Stapelfasern und deren Verfestigung mittels Vernadelung und/oder Schmelzfasern können dem Buch "Vliesstoffe", Seiten 270 ff, Wiley VCH, erschienen im Jahr 2000 entnommen werden.

Das abströmseitig angebrachte Meltblown-Vlies muss des Weiteren auch bereits über eine ausreichende eigene mechanische aber auch über thermische Stabilität verfügen. Materialien aus der Reihe der Polyester haben sich hier als günstig erwiesen. Auch hier können die prinzipiellen Möglichkeiten zur Herstellung eines Meltblown-Vliesstoffes dem Buch "Vliesstoffe", Seiten 219 ff, Wiley VCH, 2000 entnommen werden.

Der Verbund geschieht thermisch mittels eines Kalanders.

Der Kalandergravur kommt dabei eine besondere Bedeutung zu: Die Abstände der einzelnen Verbindungspunkte sind so zu wählen, dass sie einerseits weit genug auseinander liegen, dass die filtertechnischen Eigenschaften wie Fluiddurchlässigkeit und Partikelspeicherfähigkeit weitgehend unbeeinflusst bleiben. Zum anderen müssen aber die Abstände der einzelnen Verbindungspunkte zueinander so gering ausfallen, dass das abströmseitige Meltblown sich nur wenig ausdehnen kann, d.h. die Gefahr des Aufplatzens minimiert wird.

Als erfindungsgemäß geeignet erwiesen haben sich Kalandergravuren, die eine Gravurtiefe von größer 1 mm und maximal 3mm haben. Geringere Tiefen führen zu Plastifizierungen am abströmseitig angeordneten Meltblown-Vlies und sind daher als unbrauchbar für die Filtermedien der Erfindung einzustufen. Wird die vorbezeichnete Obergrenze überschritten ist die Gravur mechanisch instabil, ein hoher Verschleiß an der Gravurwalze ist die Folge.

Damit im erfindungsgemäßen Filtermedium die mechanische Stabilität des Meltblown-Vliesstoffes gewährleistet ist, dürfen die Gravurpunkte einen Abstand von 5mm zueinander nicht überschreiten. Ansonsten kann bei Anwendung als planer Filter oder in Filtertaschen- die anströmende Luft bläht das Filtermedium - das abströmseitige Meltblown partiell überdehnen und kann platzen. Ein Filterdurchbruch wäre die Folge.

Um darüber hinaus die Luftdurchlässigkeit des erfindungsgemäßen Filtermediums zu gewährleisten, darf die Verbindungsfläche nicht über 25% liegen. Der bevorzugte Bereich liegt zwischen 12 und 18% Verbindungsfläche, entsprechend 8 bis 25 Gravurpunkten pro Quadratzentimeter.

Nachstehend wird eine Gegenüberstellung der technischen Daten eines erfindungsgemäßen Filtermediums zum bekannten Stand der Technik gegeben.

Das erfindungsgemäße Produkt hat dabei folgenden Aufbau:

| | |
|---|---|
| Anströmseite: | kardierter Stapelfaser-Vliesstoff in einem Flächengewicht von 60 g/qm (gemäß EDANA 40.2-90) von aus 40% PET-Homopolymerfaser 0.9 dtex/38mm und 60% PET-Homopolymer-Faser 3.3dtex/38mm, mechanisch mittels Nadeltechnik verfestigt. |
| Abströmseite: | Meltblown-Vliesstoff aus 100% PBT, Flächengewicht von 50 g/qm (gemäß EDANA 40.3-90). |
| Gravur: | Bindepunktform rund, Verbindungsfläche 18%, 16 Punkte pro Quadratzentimeter, Gravurtiefe 1,50mm, Abstand zueinander 1,2mm |

Vergleichsbeispiel gemäß Stand der Technik: Klebeverbund aus

| | |
|---|---|
| Anströmseite: | kardierter Stapelfaser-Vliesstoff in einem Flächengewicht von 60 g/qm (gemäß EDANA 40.2-90) von aus 40% CoPET/PET-Schmelzklebefaser 4.4 dtex/50mm und 60% PET-Homopolymer-Faser 3.3dtex/38mm, thermisch und mechanisch mittels Nadeltechnik verfestigt. |
| Abströmseite: | Meltblown-Vliesstoff aus 100% PP, Flächengewicht von 50 g/qm (gemäß EDANA 40.3-90). |
| Stabilisierungslage: | abströmseitig angeordneter Spinnvliesstoff aus 100%PP, 30 g/qm |
| Kleber: | Hotmeltklebstoff, jeweils 8 g/qm pro Lage |

**Tabelle 1: Vergleich der technischen Daten**

| **Parameter** | **Erfindungsgemäßes Material** | **Stand der Technik** |
|---|---|---|
| Flächengewicht in g/qm (EDANA 40.3-90) | 110 | 156 |
| Dicke in mm (EDANA 30.5-99, 0.5kPa-Vorlast) | 0,80 | 2,8 |
| Luftdurchlässigkeit in l/qm*sec (gemäß EDANA 140.2-99 bei dP 200Pa) | 247 | 268 |
| Abscheidegrad in % (gemäß DIN 44956-2 gegenüber DEHS) | 68,5 | 52,9 |
| Reißfestigkeit in Längsrichtung in N/50mm (gemäß EDANA 20.2-89) | 146 | 65 |
| Reißfestigkeit in Querrichtung in N/50mm (gemäß EDANA 20.2-89) | 120 | 56 |
| Längsdehnung bei 10N-Krafteinwirkung in % (gemäß EDANA 20.2-89) | 0,7 | 14,9 |
| Querdehnung bei 10N-Krafteinwirkung in % (gemäß EDANA 20.2-89) | 0,8 | 18,6 |

Betrachtet man die Ergebnisse der Tabelle 1, so zeigt sich deutlich, dass bei geringerem Flächengewicht und annähernd gleicher Luftdurchlässigkeit ein deutlich höherer Staubabscheidegrad erreicht wird.

Die mechanischen Eigenschaften Reißkraft in Längs- und Querrichtung, sowie die Dehnung bei 10N Krafteinwirkung unterscheiden sich beim erfindungsgemäßen Produkt vollständig vom Produkt nach dem Stand der Technik. Man kann der Tabelle 1 entnehmen, dass ein erfindungsgemäßes Filtermedium eine doppelt so hohe Kraftaufnahme hat wie eine Material nach dem Stand der Technik, die Dehnung bei 10N-Kraft beträgt beim erfindungsgemäßen Vlies lediglich einen Bruchteil dessen vom Stand der Technik, bei dem zur Stabilisierung abströmseitig zusätzlich ein Spinnvlies angebracht ist.

Durch die extrem geringen Dehnungen und die hohen Reißkräfte kann das erfindungsgemäße Filtermedium auch in Filtern verwendet werden, die bisher klassisch mit Filterpapieren ausgestattet wurden, beispielsweise im Bereich der Zuluft-Filtration von Automobilen oder der Diesel- bzw. Ölfiltration.

In der KFZ-Zuluftfiltration werden Filter wechselnden klimatischen Bedingungen ausgesetzt. Herkömmliche, dem Stand der Technik entsprechende Materialien aus zellulosischen Grundstoffen neigen speziell bei hoher Feuchte zum Quellen. In Folge dessen verringern sich die Porengrößen und das Filter zeigt eine geringere Luftdurchlässigkeit. Des Weiteren kommt es durch die Feuchte und Anwesenheit von Mikroorganismen leicht zum Faulen von derartigen Filtern, was zu Geruchsbelästigungen oder mikrobiellen Kontaminationen der Reinluft führt. Beide Nachteile lassen sich, dem Stand der Technik entsprechend, durch Bindemittel und entsprechende antimikrobiell wirkende Zusätze verhindern. Nachteilig ist hier, dass sich alle diese Zusätze negativ in Schadstoffuntersuchungen, sei es bei Geruchsprüfungen nach VDA 270 oder bei mengenmäßiger Erfassung von sich ablösenden Substanzen, beispielsweise WOC oder VOC-Messungen nach VDA 278, erwiesen haben.

Hier bietet das erfindungsgemäße Material deutliche Vorteile.

Ein erfindungsgemäßes Filtermedium weist keine Schadstoffemissionen auf, sodass nach Tests gemäß VDA 270 bzw. 278 nur Noten von 1 erreicht werden. Des Weiteren ist, da das erfindungsgemäße Material ausschließlich aus synthetischen Polymeren besteht, die Verstoffwechselbarkeit des Materials für Mikroben (ermittelt gemäß DIN EN ISO 846) nicht gegeben. Ein erfindungsgemäßes Filtermedium verhält sich gegenüber Mikroben inert.

Bei Beaufschlagung mit Feuchtigkeit ändert sich die Porengröße eines erfindungsgemäßen Filtermediums aufgrund der Verwendung ausschließlich synthetischer Ausgangsmaterialien nicht.

in Tabelle 2 sind Porengrößen des erfindungsgemäßen Filtermediums im Vergleich zu einem Medium nach dem Stand der Technik im Normalklima und nach 24-stündiger Lagerung bei 36grdC und 80%rel Luftfeuchte aufgezeigt.

Während ein Material nach dem Stand der Technik eine Veränderung der Porengrößen zeigt, bleiben beim erfindungsgemäßen Filtermedium die Porengrößen unverändert.

**Tabelle 2: Vergleich der Porengrößenänderung bei Flüssigkeitsbeaufschlagung**

| **Parameter** | **Erfindungsgemäßes Material** | **Stand der Technik** |
|---|---|---|
| Porengröße im Normklima (bei 22grdC / 65% rel.Feuchte, in µm) | 38 | 32 |
| Porengröße nach 24 Stunden Lagerung bei 36grdC und 80%rel Feuchte (in µm) | 37 | 22 |

Diese Eigenschaft, in Gegenwart von Feuchtigkeit die Porengrößen nicht zu ändern, erschließt eine Reihe von Anwendungen, die derzeit klassisch von Papiermedien bedient werden. Hierzu zählen neben KFZ-Zuluftfiltern auch Diesel- und Ölfiltern sowie alle Arten von plissierten Filtereinsätzen.

## Patentansprüche

1. Mehrlagiges Filtermedium für die Luft- und Flüssigkeitsfiltration umfassend mindestens eine in Abströmrichtung als letzte Schicht angeordnete Meltblownlage, bestehend aus einem thermoplastischen Polymer sowie mindestens einer Filterlage, bestehend aus einem thermoplastischen Stapelfaservliesstoff, wobei die beiden Lagen mittels Druck und Hitze an definierten Prägestellen miteinander verbunden sind,
**dadurch gekennzeichnet, dass**
➢ der die Filterlage bildende thermoplastische Stapelfaservliesstoff aus einem kardierten Nadelvliesstoff aus synthetischen Stapelfasern gebildet wird,
➢ dass die Filterlage Poren mit einer Größe von größer 400µm aufweist und
➢ dass die Meltblownlage Poren mit einer Größe von 20µm bis 200µm aufweist

2. Filtermedium nach Anspruch 1,
**dadurch gekennzeichnet, dass**
die Meltblownlage aus einem Polymer aus der Gruppe der thermoplastischen Elastomere, Polybuthylenterephtalate, Polyethylenterephtalate, Polypropylene oder Polyamide besteht.

3. Filtermedium nach einem der Ansprüche 1 bis 2,
**dadurch gekennzeichnet, dass**
die die Filterlage bildenden Stapelfasern eine Feinheit von mindestens 0,9 dtex und von höchstens 12,0 dtex besitzen.

4. Dieselkraftstoff-Filterelement,
**dadurch gekennzeichnet, dass**
es ein Filtermedium gemäß den Ansprüchen 1 bis 3 enthält.

5. Öl-Filterelement,
**dadurch gekennzeichnet, dass**
es ein Filtermedium gemäß den Ansprüchen 1 bis 3 enthält.

## Claims

1. Multi-layer filter medium for air and liquid filtration comprising at least one meltblown layer arranged as the last layer in the flow-off direction and consisting of a thermoplastic polymer, and at least one filter layer, consisting of a thermoplastic staple fibre non-woven fabric, with both layers joined together at predefined impression points via pressure and heat,
**characterised in that**
➢ the thermoplastic staple fibre non-woven fabric constituting the filter layer is made out of carded needle-punched non-woven fabric using synthetic staple fibres,
➢ the filter layer features pores larger than 400 µm, and
➢ the meltblown layer features pores with a size of 20 µm to 200 µm.

2. Filter medium according to claim 1,
**characterised in that**
the meltblown layer consists of a polymer from the group of thermoplastic elastomers, polybutylene terephthalates, polyethylene terephthalates, polypropylenes or polyamides.

3. Filter medium according to one of the claims 1 to 2,
**characterised in that**
the staple fibres constituting the filter layer feature a fineness of at least 0.9 dtex and no more than 12.0 dtex.

4. Diesel fuel filter element,
**characterised in that**
it includes a filter medium in accordance with claims 1 to 3.

5. Oil filter element,
**characterised in that**
it includes a filter element in accordance with claims 1 to 3.

## Revendications

1. Média filtrant multicouches pour la filtration de l'air et de liquides, comprenant au moins une couche filée-liée agencée en tant que dernière couche dans le sens de l'écoulement, composée d'un polymère thermoplastique, ainsi qu'au moins une couche filtrante composée d'un non-tissé thermoplastique en fibres discontinues, sachant que les deux couches sont reliées entre elles par compression et chaleur dans des zones de gaufrage définies,
**caractérisé en ce que**
➢ le non-tissé thermoplastique en fibres discontinues formant la couche filtrante est formé d'un non-tissé aiguilleté cardé en fibres synthétiques discontinues,
➢ la couche filtrante présente des pores dont la taille dépasse 400 microns, et **en ce que**
➢ la couche filée-liée présente des pores dont la taille est comprise entre 20 et 200 microns.

2. Média filtrant selon la revendication 1
**caractérisé en ce que**
la couche filée-liée se compose d'un polymère issu du groupe des élastomères thermoplastiques, polybutylènes téréphtalates, polyéthylènes téréphtalates, polypropylènes ou polyamides.

3. Média filtrant selon l'une des revendications 1 ou 2,
**caractérisé en ce que**
les fibres discontinues formant la couche filtrante présentent une finesse d'au minimum 0,9 dtex et d'au maximum 12,0 dtex.

4. Élément filtrant pour carburant diesel,
**caractérisé en ce que**
ledit élément contient un média filtrant conforme aux revendications 1 à 3.

5. Élément filtrant pour huile,
**caractérisé en ce que**
ledit élément contient un média filtrant conforme aux revendications 1 à 3.
